# FASCICULE DE BREVET EUROPEEN

(11) **EP 2 796 334 B1**
(45) Date de publication et mention de la délivrance du brevet: **02.10.2019**
(21) Numéro de dépôt: 14165536.5
(22) Date de dépôt: 23.04.2014
(51) Int. Cl.: B61D 25/00

(54) **Assemblage de plaque, voiture de véhicule ferroviaire et procédé de montage associés**
Plattenaufbau, Schienenfahrzeug und entsprechendes Montageverfahren
Panel assembly, railway vehicle and associated assembly method

(30) Priorité: 24.04.2013 FR 1353747
(43) Date de publication de la demande: 29.10.2014
(73) Titulaire: ALSTOM Transport Technologies, 93400 Saint-Ouen (FR)
(72) Inventeur: Merchez, Jacques, 59770 Marly (FR); Klakulak, Nicolas, 59580 Aniche (FR); Zuin, Stéphane, 59233 Maing (FR); Leclercq, Bernard, 59300 Famars (FR)
(74) Mandataire: Lavoix

(56) Documents cités:
- EP-A1- 0 233 143
- WO-A2-2004/033238
- DE-U1- 20 113 220
- JP-A- H11 342 843
- US-A1- 2001 030 449

## Description

La présente invention concerne un assemblage de plaque destiné à être rapporté dans l'ouverture d'une structure de voiture de véhicule ferroviaire. L'invention concerne également un véhicule ferroviaire comprenant un tel assemblage et un procédé de montage de l'assemblage.

Un tel assemblage est par exemple connu par les documents JP 411342843 A, DE 20113220 U1, EP 0233143 A1, WO 2004033238 A2 et US 20010030449 A1.

Dans le cycle de vie d'un véhicule ferroviaire, il est relativement fréquent de changer les vitres, par exemple suite à une avarie ou un acte de malveillance. Les opérations de démontage de l'ancienne vitre et de montage d'une nouvelle vitre immobilisent le véhicule ferroviaire. Il est ainsi souhaitable que le montage d'une vitre sur une ouverture d'une structure de voiture de véhicule ferroviaire soit le plus rapide possible.

Pour cela, il est connu du document FR-A-2 903 723, un vitrage consistant en une plaque au moins en partie transparente, dont une partie au moins de la périphérie d'une première face est reliée à une semelle par l'intermédiaire d'un collage structural, ladite semelle étant apte à être fixée sur une structure.

Toutefois, un tel vitrage présente des fragilités mécaniques.

Il existe donc un besoin pour un assemblage de vitre présentant une meilleure résistance mécanique tout en permettant un montage rapide sur une ouverture de structure de voiture de véhicule ferroviaire.

A cet effet, l'invention propose un assemblage de plaque destiné à être rapporté dans l'ouverture d'une structure de voiture de véhicule ferroviaire selon la revendication 1.

Suivant des modes de réalisation particuliers, l'assemblage comprend une ou plusieurs des caractéristiques suivantes, prise(s) isolément ou suivant toutes les combinaisons techniquement possibles :
- l'assemblage comporte, en outre, un élément d'étanchéité, l'élément d'étanchéité étant, au moins en partie, en regard de la plaque selon une direction normale à une face de la plaque.
- l'élément d'étanchéité est en contact avec la plaque, avec le premier élément de fixation et avec la couche de colle.
- l'élément d'étanchéité est un fond de joint et un cordon de mastic d'étanchéité.
- le premier élément de fixation est un profilé.
- le premier élément de fixation est un profilé dont la section transversale est en forme de C.
- le ou chaque deuxième élément de fixation comprend une vis en T.

En outre, l'invention se rapporte aussi à une voiture de véhicule ferroviaire comprenant un assemblage tel que précédemment décrit.

La présente invention a également pour objet un procédé de montage d'une plaque en matériau transparent ou translucide dans l'ouverture d'une structure de voiture de véhicule ferroviaire, comprenant la fixation d'un assemblage de plaque tel que précédemment décrit et la réalisation de l'étanchéité entre la plaque et la structure. La fixation de l'assemblage et la réalisation de l'étanchéité sont mises en oeuvre simultanément

D'autres caractéristiques et avantages de l'invention apparaîtront à la lecture de la description détaillée qui suit de modes de réalisation de l'invention, donnés à titre d'exemple uniquement et en références aux dessins qui sont :
- figure 1, une vue schématique d'une partie d'un véhicule ferroviaire comprenant un assemblage de plaque selon un premier mode de réalisation de l'invention vue depuis l'intérieur du véhicule ferroviaire,
- figure 2, une vue schématique d'une partie de l'assemblage de plaque de la figure 1 selon l'axe II-II, et
- figure 3, une vue schématique d'une partie de l'assemblage de plaque selon un deuxième mode de réalisation de l'invention vu selon le même axe que l'axe II-II de la figure 1.

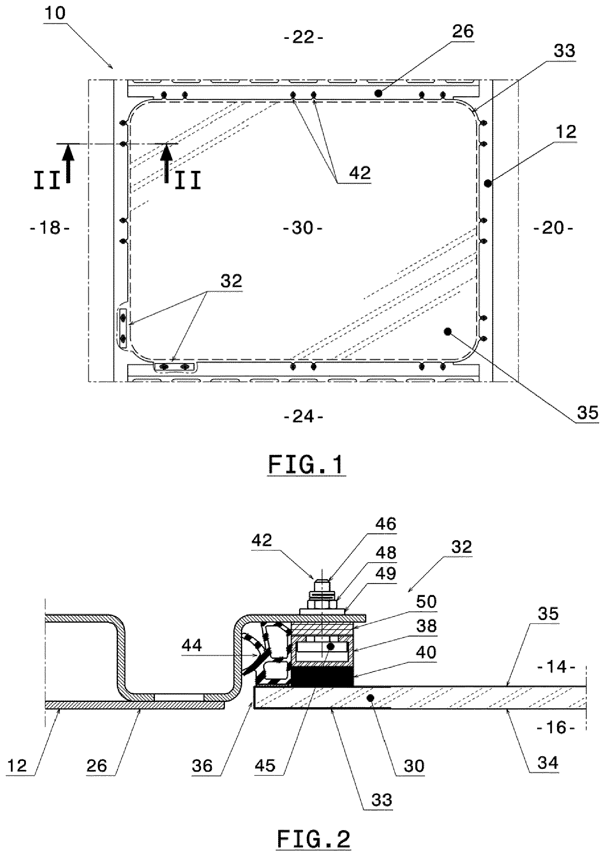

L'assemblage de plaque 10 représenté sur la figure 1 est destiné à être rapporté dans l'ouverture d'une structure 12 de voiture de véhicule ferroviaire.

Dans la suite, pour faciliter le repérage des différentes parties de l'assemblage de vitre 10 dans l'espace, il est défini un côté intérieur 14 tourné vers l'intérieur du véhicule ferroviaire, un côté extérieur 16 tourné vers l'extérieur du véhicule ferroviaire et donc à l'opposé du côté intérieur 14, un côté gauche 18, un côté droit 20, un côté supérieur 22 et un côté inférieur 24 de l'assemblage 10 lorsque celui-ci est regardé depuis l'intérieur vers l'extérieur.

La structure 12 de voiture de véhicule ferroviaire comporte une carrosserie 26.

L'assemblage 10 comporte une plaque 30 en un matériau transparent sous forme d'une vitre 30, une pluralité d'interfaces 32 de fixation et d'étanchéité et une sérigraphie 33 masquant les interfaces 32 pour un observateur placé du côté extérieur 16. Dans le cas particulier où la plaque 30 est une vitre, l'assemblage 10 est un assemblage de vitre. Cette expression est utilisée dans tout le reste de la description.

Selon une variante, la plaque 30 est en matériau translucide.

Dans l'exemple illustré par la figure 1, le garnissage intérieur du train permettant de masquer les interfaces 32 depuis le côté intérieur 14 n'est pas représenté.

La vitre 30 est dans une matière transparente. Par exemple, la vitre 30 est en polycarbonate.

La vitre 30 est entourée du côté gauche 18, du côté droit 20, du côté supérieur 22 et du côté inférieur 24 par la carrosserie 26 de la structure 12.

La vitre 30 dans cet exemple est de forme parallélépipédique rectangle. Comme visibles sur la figure 2, la vitre 30 comporte une face extérieure 34 du côté extérieur 16 et une face intérieure 35 du côté intérieur 14. La vitre 30 comprend également quatre bords 36 reliant la face extérieure 34 à la face intérieure 35. Seul un des bords 36 est visible sur la figure 2.

En variante, la forme de la vitre 30 est quelconque, notamment trapézoïdale ou circulaire.

Dans l'exemple de la figure 1, douze interfaces 32 de fixation et d'étanchéité sont reparties sur la périphérie de la vitre 30. On entend par « périphérie » la partie de la vitre 30 qui est recouverte par la sérigraphie 33. Plus précisément, trois interfaces 32 de fixation et d'étanchéité sont positionnées sur la face intérieure 35 du côté supérieur 22 ; trois interfaces 32 de fixation et d'étanchéité sont positionnées sur la face intérieure 35 du côté inférieur 24 ; trois interfaces 32 de fixation et d'étanchéité sont positionnées sur la face intérieure 35 du côté gauche 18 et trois interfaces 32 de fixation et d'étanchéité sont positionnées sur la face intérieure 35 du côté droit 20.

En variante, en périphérie de la vitre, une seule interface 32 de fixation et d'étanchéité est positionnée de manière continue. Cela permet de garantir un meilleur maintien de la vitre 30 dans la structure 12.

L'interface 32 illustrée à la figure 2 comporte un premier élément de fixation 38, une couche d'adhésif 40, deux deuxièmes éléments de fixation 42 et un élément d'étanchéité 44.

Le premier élément de fixation 38 est un profilé. Selon l'exemple de la figure 2, le premier élément de fixation 38 est un profilé en C, c'est-à-dire dont la section transversale est en forme C.

La couche d'adhésif 40 assure le collage du premier élément de fixation 38 à la vitre 30. Plus précisément, la couche d'adhésif 40 assure le collage du premier élément de fixation 38 sur la face intérieure 35. La couche d'adhésif 40 est interposée entre la face intérieure 35 et le premier élément de fixation 38.

A titre d'exemple, la couche d'adhésif 40 est une couche de colle.

La couche d'adhésif 40 est en contact avec la face intérieure 35 de la vitre 30. En outre, la couche d'adhésif 40 s'étend entre deux plans perpendiculaires à la face intérieure 35 de la vitre 14.

Chaque deuxième élément de fixation 42 coopère avec le premier élément de fixation 38 et est propre à être relié à la structure 12.

Chaque deuxième élément de fixation 42 comprend une vis comprenant une tête 45 de forme complémentaire à la section transversale du premier élément de fixation 38, une tige 46 filetée et un écrou 48 complémentaire de la tige 46.

En variante, chaque deuxième élément de fixation 42 comprend en outre une rondelle 49.

En variante, comme visible sur la figure 2, chaque deuxième élément de fixation 42 comprend en outre une cale 50.

La tête 45 et la tige 46 confèrent au deuxième élément de fixation 42 une forme de vis en T.

La tête 45 est insérée dans le premier élément de fixation 38 tandis que la tige 46 est en saillie par l'ouverture du premier élément de fixation 38.

L'écrou 48 permet d'assurer la fixation du deuxième élément de fixation 42 à la structure 12.

La rondelle 49 est intercalée entre l'écrou 48 et la structure 12.

La cale 50 est positionnée entre la structure 12 et le premier élément de fixation 38. Selon l'exemple de la figure 1, la cale 50 est en polyamide.

Chaque deuxième élément de fixation 42 est agencé en regard de la couche d'adhésif 40 selon une direction normale à la face intérieure 35 de la vitre 30.

Cela signifie que chaque deuxième élément de fixation 42 est agencé entre les deux plans perpendiculaires à la face intérieure 35 entre lesquelles s'étend la couche d'adhésif 40.

L'élément d'étanchéité 44 assure l'étanchéité entre la vitre 30 et la structure 12.

L'élément d'étanchéité 44 est, au moins en partie, en regard de la vitre 30 selon une direction normale à la face intérieure 35 de la vitre 30.

Ainsi, l'élément d'étanchéité 44 est en contact avec la face intérieure 35 de la vitre et en contact avec la carrosserie 26 de la structure 12. L'élément d'étanchéité 44 est ainsi comprimé entre la carrosserie 26 de la structure 12 et la vitre 30 du fait du serrage entre la vis et l'écrou 48.

En outre, l'élément d'étanchéité 44 est en contact avec le premier élément de fixation 38 et la couche de colle 40 du côté droit 20.

A titre d'exemple, l'élément d'étanchéité 44 est un joint en élastomère, par exemple du caoutchouc.

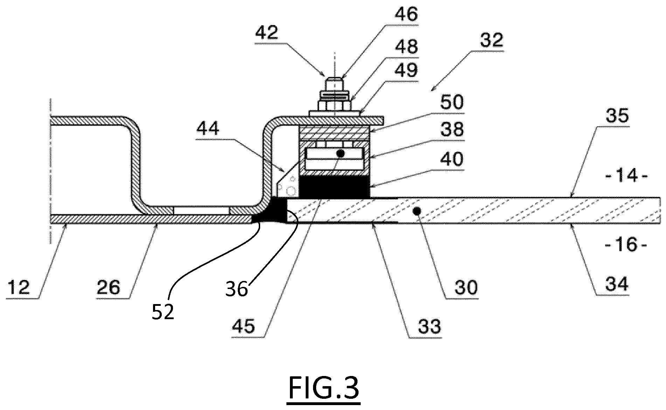

Selon un deuxième mode de réalisation illustré sur la figure 3, l'élément d'étanchéité 44 est un fond de joint et un cordon de mastic d'étanchéité 52 réalisé depuis le côté extérieur 16.

L'élément d'étanchéité 44 est peu visible du côté extérieur 16 parce que l'élément d'étanchéité 44 est caché par la sérigraphie 33. Ceci implique que l'accessibilité à l'élément d'étanchéité 44 est rendu plus difficile depuis le côté extérieur 16. Pour cette raison, l'élément d'étanchéité 44 est mieux protégé des dégradations. Les dégradations sont, par exemple, dues à l'environnement ou à des actes de vandalisme.

L'élément d'étanchéité 44 est également invisible du côté intérieur 14 car l'élément d'étanchéité 44 est masqué par le garnissage, non représenté. Cela permet d'obtenir un assemblage de vitre 10 présentant une esthétique agréable et discrète.

Le montage de l'assemblage de vitre 10 selon l'exemple illustré par les figures 1 et 2 est particulièrement aisé.

Pour cela, le montage comprend la fixation de l'assemblage de vitre 10 à la structure 12.

La fixation de l'assemblage de vitre 10 comprend le positionnement de la vitre 30 munie des interfaces 32 de fixation et d'étanchéité de sorte que chaque deuxième élément de fixation 42 soit en regard de la structure 12.

La fixation de l'assemblage de vitre 10 comprend alors le serrage des différents écrous 48 de manière à assurer la fixation de chaque deuxième élément de fixation 42 à la structure 12.

Simultanément, l'étanchéité est réalisée à l'aide de l'élément d'étanchéité 44 dont on s'assure qu'il est positionné entre une partie de la carrosserie 26 et la vitre 30.

Ainsi, le montage de l'assemblage de vitre 10 selon l'invention est particulièrement rapide à mettre en oeuvre. Il devient possible d'effectuer une opération de démontage-remontage de l'assemblage de vitre 10 en une heure environ. En effet, les étapes de fixation et d'étanchéité sont réalisées dans la même opération, sans application d'un joint d'étanchéité (mastic) après la pose mécanique de la vitre 30 sur la structure 12.

L'opération de montage est possible depuis le côté extérieur 16 ou depuis le côté intérieur 14 selon ce qui est le plus commode pour l'opérateur. Cela rend le montage plus aisé à mettre en oeuvre.

En outre, comme chaque deuxième élément de fixation 42 est agencé en regard de la couche d'adhésif 40 selon une direction normale à la face intérieure 35 de la vitre 30, cela permet de travailler directement en traction compression sans bras de levier généré par le phénomène d'ondes de pression entre le deuxième élément de fixation 42 et la couche d'adhésif 40 (phénomène de cavitation).
En outre, la surface de vitre 30 est augmentée tout en diminuant au maximum l'écart entre la structure 12 et la vitre 30. Il en résulte un meilleur maintien mécanique que dans l'état de la technique. Ainsi, l'invention permet d'obtenir une surface équivalente de vitre 30 plus importante augmentant la luminosité à l'intérieur du véhicule ferroviaire.

L'assemblage 10 selon l'invention autorise des formes géométriques quelconques pour la vitre 30 donnant une dimension esthétique supplémentaire.

En outre, l'invention s'applique à tout type de plaque 30 en matériau transparent ou translucide, et en particulier des plaques 30 en plexiglas.

## Revendications

1. Assemblage (10) de plaque destiné à être rapporté dans l'ouverture d'une structure de voiture de véhicule ferroviaire, l'assemblage (10) comportant :
- une plaque (30) en un matériau transparent ou translucide comportant deux faces (34, 35),
- un premier élément de fixation (38),
- une couche d'adhésif (40) assurant le collage du premier élément de fixation (38) à la plaque (30),
- au moins un deuxième élément de fixation (42) coopérant avec le premier élément de fixation (38), chaque deuxième élément de fixation (42) étant propre à être relié à la structure (12),
- chaque deuxième élément de fixation (42) étant agencé en regard de la couche d'adhésif (40) selon une direction normale à une face (34, 35) de la plaque (30),
l'assemblage (10) étant **caractérisé en ce que** le premier élément de fixation (38) et le deuxième élément de fixation (42) ont des formes complémentaires et **en ce que** le ou chaque deuxième élément de fixation (42) comprend une vis comprenant une tête (45) de forme complémentaire à la section transversale du premier élément de fixation (38), une tige (46) filetée et un écrou (48) complémentaire de la tige (46).

2. L'assemblage selon la revendication 1, dans lequel l'assemblage (10) comporte, en outre, un élément d'étanchéité (44), l'élément d'étanchéité (44) étant, au moins en partie, en regard de la plaque (30) selon une direction normale à une face (34, 35) de la plaque (30).

3. L'assemblage selon la revendication 2, dans lequel l'élément d'étanchéité (44) est en contact avec la plaque (30), avec le premier élément de fixation (38) et avec la couche de colle (40).

4. L'assemblage selon les revendications 2 ou 3, dans lequel l'élément d'étanchéité (44) est un fond de joint et un cordon de mastic d'étanchéité (52).

5. L'assemblage selon l'une quelconque des revendications 1 à 4, dans lequel le premier élément de fixation (38) est un profilé.

6. L'assemblage selon la revendication 5, dans lequel le premier élément de fixation (38) est un profilé dont la section transversale est en forme de C.

7. L'assemblage selon l'une quelconque des revendications 1 à 6, dans lequel la vis du ou de chaque deuxième élément de fixation (42) est une vis en T.

8. Voiture de véhicule ferroviaire comprenant un assemblage (10) selon l'une quelconque des revendications 1 à 7.

9. Procédé de montage d'une plaque (30) en matériau transparent ou translucide dans l'ouverture d'une structure (12) de voiture de véhicule ferroviaire, comprenant :
- la fixation d'un assemblage de plaque (10) selon l'une quelconque des revendications 1 à 7,
- la réalisation de l'étanchéité entre la plaque (30) et la structure (12),
la fixation de l'assemblage et la réalisation de l'étanchéité étant mises en oeuvre simultanément.

## Patentansprüche

1. Platten-Einrichtung (10), die dazu bestimmt ist, in der Öffnung einer Struktur eines Schienenfahrzeugwagens eingebracht zu sein, wobei die Einrichtung (10) aufweist:
- eine Platte (30) aus einem transparenten oder transluzenten Material, die zwei Seiten (34, 35) hat,
- ein erstes Befestigungselement (38),
- eine Klebeschicht (40), die die Verklebung des ersten Befestigungselements (38) mit der Platte (30) gewährleistet,
- wenigstens ein zweites Befestigungselement (42), das mit dem ersten Befestigungselement (38) kooperiert, wobei jedes zweite Befestigungselement (42) imstande ist, mit der Struktur (12) verbunden zu sein,
- wobei jedes zweite Befestigungselement (42) gegenüber der Klebeschicht (40) entlang einer Normalen-Richtung zu einer Seite (34, 35) der Platte (30) angeordnet ist,
wobei die Einrichtung (10) **dadurch gekennzeichnet ist, dass** das erste Befestigungselement (38) und das zweite Befestigungselement (42) komplementäre Formen haben und dass das oder jedes zweite Befestigungselement (42) aufweist eine Schraube mit einem Kopf (45) von einer Form, die komplementär ist zu dem Querschnitt des ersten Befestigungselements (38), einen mit Gewinde versehenen Schaft (46) und eine Mutter (48), die zu dem Schaft (46) komplementär ist.

2. Einrichtung gemäß Anspruch 1, wobei die Einrichtung (10) ferner aufweist ein Dichtungselement (44), wobei das Dichtungselement (44) zumindest teilweise der Platte (30) gegenüber ist entlang einer Normalen-Richtung zu einer Seite (34, 35) der Platte (30).

3. Einrichtung gemäß Anspruch 2, wobei das Dichtungselement (44) mit der Platte (30), mit dem ersten Befestigungselement (38) und mit der Klebeschicht (40) in Kontakt ist.

4. Einrichtung gemäß den Ansprüchen 2 oder 3, wobei das Dichtungselement (44) einen Dichtungsboden und eine Dichtungsmasse-Naht (52) ist.

5. Einrichtung gemäß irgendeinem der Ansprüche 1 bis 4, wobei das erste Befestigungselement (38) ein Profil ist.

6. Einrichtung gemäß Anspruch 5, wobei das erste Befestigungselement (38) ein Profil ist, dessen Querschnitt eine C-Form hat.

7. Einrichtung gemäß irgendeinem der Ansprüche 1 bis 6, wobei die Schraube des oder jedes Befestigungselements (42) eine T-Schraube ist.

8. Schienenfahrzeug-Wagen, aufweisend eine Einrichtung (10) gemäß irgendeinem der Ansprüche 1 bis 7.

9. Verfahren zum Montieren einer Platte (30) aus einem transparenten oder transluzenten Material in der Öffnung einer Struktur (12) eines Schienenfahrzeugwagens, aufweisend:
- das Befestigen einer Platten-Einrichtung (10) gemäß irgendeinem der Ansprüche 1 bis 7,
- das Realisieren der Abdichtung zwischen der Platte (30) und der Struktur (12),
wobei das Befestigen der Einrichtung und das Realisieren der Abdichtung simultan durchgeführt werden.

## Claims

1. Panel assembly (10) which is to be fitted into the opening of a railway vehicle carriage structure, the assembly (10) comprising:
- a panel (30) of a transparent or translucent material having two faces (34, 35),
- a first fixing element (38),
- a layer of adhesive (40) serving to glue the first fixing element (38) to the panel (30),
- at least one second fixing element (42) cooperating with the first fixing element (38), each second fixing element (42) being capable of being connected to the structure (12),
- each second fixing element (42) being arranged opposite the layer of adhesive (40) in a direction normal to a face (34, 35) of the plate (30),
the assembly (10) being **characterised in that** the first fixing element (38) and the second fixing element (42) have complementary shapes, and **in that** the or each second fixing element (42) comprises a screw having a head (45) of a shape that is complementary to the cross-section of the first fixing element (38), a threaded rod (46), and a screw (48) complementary to the rod (46).

2. Assembly according to claim 1, wherein the assembly (10) further comprises a sealing element (44), the sealing element (44) being, at least in part, opposite the panel (30) in a direction normal to a face (34, 35) of the panel (30).

3. Assembly according to claim 2, wherein the sealing element (44) is in contact with the panel (30), with the first fixing element (38) and with the layer of glue (40).

4. Assembly according to claim 2 or 3, wherein the sealing element (44) is a backing material and a bead of mastic sealing compound (52).

5. Assembly according to any one of claims 1 to 4, wherein the first fixing element (38) is a profile.

6. Assembly according to claim 5, wherein the first fixing element (38) is a profile the cross-section of which is C-shaped.

7. Assembly according to any one of claims 1 to 6, wherein the screw of the or each second fixing element (42) is a T-shaped screw.

8. Railway vehicle carriage comprising an assembly (10) according to any one of claims 1 to 7.

9. Method for mounting a panel (30) of transparent or translucent material in the opening of a railway vehicle carriage structure (12), comprising:
- the fixing of a panel assembly (10) according to any one of claims 1 to 7;
- the production of a seal between the panel (30) and the structure (12), the fixing of the assembly and the production of the seal being carried out simultaneously.
